Europäisches Patentamt

European Patent Office

Office européen des brevets

(19)

(11) EP 0 776 288 B1

(12) EUROPÄISCHE PATENTSCHRIFT

(45) Veröffentlichungstag und Bekanntmachung des Hinweises auf die Patenterteilung:
07.10.1998 Patentblatt 1998/41

(21) Anmeldenummer: 95929022.2

(22) Anmeldetag: 28.07.1995

(51) Int. Cl.$^6$: B60T 8/00

(86) Internationale Anmeldenummer:
PCT/EP95/02996

(87) Internationale Veröffentlichungsnummer:
WO 96/06765 (07.03.1996 Gazette 1996/11)

(54) **VERFAHREN ZUM SCHNELLEN ERKENNEN EINES NOTRADES**

PROCESS FOR THE FAST RECOGNITION OF THE SPARE WHEEL

PROCEDE DE RECONNAISSANCE RAPIDE DE ROUES DE SECOURS

(84) Benannte Vertragsstaaten:
DE FR GB

(30) Priorität: 27.08.1994 DE 4430462

(43) Veröffentlichungstag der Anmeldung:
04.06.1997 Patentblatt 1997/23

(73) Patentinhaber:
ITT Automotive Europe GmbH
60488 Frankfurt (DE)

(72) Erfinder:
• BURKHARD, Dieter
D-67714 Waldfischbach-Burgalben (DE)
• DORNSEIFF, Manfred
D-59969 Bromskirchen (DE)
• SCHWARTZ, Jean-Claude
D-60594 Frankfurt am Main (DE)

(56) Entgegenhaltungen:
EP-A- 0 508 146          DE-A- 4 016 903
DE-A- 4 230 481

1   EP 0 776 288 B1   2

**Beschreibung**

Die Erfindung bezieht sich auf ein Verfahren zum schnellen Erkennen eines Notrades, für ein Fahrzeug mit einem elektronischen Regelungssystem, bei dem das Drehverhalten der Räder mit Radsensoren ermittelt wird und bei dem mit Korrekturfaktoren die Unterschiede der Reifenabrollumfänge erfaßt werden.

Elektronische Regelungssysteme für Kraftfahrzeuge, wie Antiblockiersysteme (ABS), Antriebsschlupfregelungen (ASR), Systeme zur elektronischen Regelung der Bremskraftverteilung (EBV) usw. benötigen als Eingangsgrößen - ausschließlich oder unter anderem - Informationen über das Drehverhalten der einzelnen Räder. Bereits geringe Unterschiede der Reifenabrollumfänge, bedingt durch Fertigungstoleranzen, ungleichen Verschleiß usw., machen sich bei der Regelung bemerkbar. Dies gilt natürlich im verstärkten Maße für den Fall der Montage eines sogen. Notrades, das kleiner oder größer als die übrigen Räder sein kann.

Aus der DE 39 15 879 A1 ist es bereits bekannt, für jedes Rad eines Fahrzeugs einen Korrekturfaktor zu errechnen. Zur Kompensation der unterschiedlichen Reifenabrollumfänge wird die gemessene Radgeschwindigkeit multipliziert mit dem zugehörigen Korrekturfaktor der weiteren Signalverarbeitung im Regelungssystem zugrunde gelegt.

Aus der Internationalen Anmeldung WO89/04783 ist bereits ein Verfahren bekannt, bei dem in Zeiträumen ohne Radschlupf die Fahrzeuggeschwindigkeit gemessen wird, aus den Abweichungen der Radgeschwindigkeiten von dieser Fahrzeuggeschwindigkeit Korrekturwerte ermittelt werden und bei dem nachfolgend die Radgeschwindigkeitkeit der einzelnen Fahrzeugräder mit diesen Korrekturwerten korrigiert werden.

In der DE 40 36 742 A1 ist eine Schaltungsanordnung für ein Antriebsschlupf-Regelungssystem mit Bremsen- oder Motoreingriff bekannt, die zur Verbesserung der Regelfunktion bei Montage eines kleineren Ersatzrades anstelle eines angetriebenen normalen Rades dient. Nach dieser Schrift wird die an dem Ersatzrad gemessene Drehgeschwindigkeit durch einen bei stabilem Raddrehverhalten ermittelten Korrekturfaktor bewertet und dadurch dem Geschwindigkeitsmeßwert des zweiten angetriebenen Rades derselben Achse derart angepaßt, daß für das kleinere Ersatzrad die gleiche Schlupf-Regelungsschwelle wie für ein Normalrad gilt.

Es ist grundsätzlich erforderlich, daß diese Korrekturfaktoren zu Beginn eines Regelungsvorganges von dem Regler ermittelt, schrittweise "erlernt" und bestätigt werden. Kurzzeitige Geschwindigkeitsänderungen können nämlich auf spezielle Fahrsituationen, wie Kurvenfahrt, Antriebs- oder Bremsmomente, Schwingungen, Störungen und dergl. zurückgehen. Es dauert daher relativ lange, bis eine derartige Regelung ein Notrad, nämlich ein Rad mit erheblich abweichendem Reifenabrollumfang, erkennen und einen entsprechenden Korrekturwert errechnen kann.

Der vorliegenden Erfindung liegt nun die Aufgabe zugrunde, ein Verfahren zu entwickeln, mit dem ein Notrad relativ schnell erkannt und eine entsprechende Anpassung der Regelung an diese Situation durchgeführt werden kann.

Es hat sich gezeigt, daß diese Aufgabe mit Hilfe des im beigefügten Anspruch 1 beschriebenen Verfahren gelingt. Die Besonderheit des erfindungsgemäßen Verfahrens besteht darin, daß für jedes Rad ein Kurzzeit- und ein Langzeit-Korrekturfaktor gebildet werden, daß die Kurzzeit-Korrekturfaktoren aus den im Arbeitstakt gemessenen, momentanen Korrektur-faktoren durch Mittelwertbildung über eine Zeitspanne in der Größenordnung zwischen 30 und 300 ms ermittelt werden, daß die Langzeit-Korrekturfaktoren aus den Differenzen zwischen den Kurzzeit- und den Langzeit-Korrekturfaktoren des jeweiligen Rades durch Mittelwertbildung über eine Zeitspanne in der Größenordnung von 5 bis 30 Sekunden und Bewertung des Mittelwertes gebildet werden, wobei jeweils ein Teilwert des Mittelwerte- zur Anpassung des Langzeit-Korrekturfaktors ausgewertet wird, daß nach einem vorgegebenen, regelmäßig wiederkehrenden Ereignis, insbesondere nach jedem Anlassen des Fahrzeugmotors, die Kurzzeit-Korrekturfaktoren der einzelnen Räder untereinander verglichen und einmalig die Langzeit-Korrekturfaktoren den Kurzzeit-Korrekturfaktoren des jeweiligen Rades gleichgesetzt oder angenähert werden, wenn gleichzeitig die Kurzzeit-Korrekturfaktoren von drei Rädern annähernd gleich sind, der Kurzzeit-Korrekturfaktor des vierten Rades für eine vorgegebene Mindestzeitspanne einen relativ hohen, innerhalb eines vorgegebenen Bereichs liegenden Wert annimmt und der Kurzzeit-Korrekturfaktor des vierten Rades während der Mindestzeitspanne annähernd konstant bleibt.

Einige besonders vorteilhafte Ausführungsbeispiele der Erfindung sind in den Unteransprüchen beschrieben.

Erfindungsgemäß wird also, wenn die Kurzzeit-Faktoren der einzelnen Räder die im Anspruch 1 definierten Werte annehmen und dieser Zustand während einer bestimmten Zeitspanne erhalten bleibt, eine unmittelbare Korrektur der ansonsten nur über längere Zeitspannen erlernbaren Langzeit-Korrekturfaktoren herbeigeführt. Nach diesem schnellen Lernschritt, der insbesondere nach dem Zünden des Motors nur einmal erlaubt ist, wird das Lernverfahren behutsam fortgesetzt.

Weitere Einzelheiten der Erfindung gehen aus der folgenden Beschreibung anhand der beigefügten Abbildungen hervor. Es zeigen

Fig. 1   in vereinfachter Darstellung einen Schaltzweig zur Ermittlung der Kurzzeit- und Langzeit-Korrekturfaktoren eines Rades,

Fig. 2   in schematisch vereinfachter Darstellung ein

2

Ausführungsbeispiel einer Schaltungsanordnung oder eines Programmlaufs zur Ausführung des erfindungsgemäßen Verfahrens und

Fig. 3      ein Flow-Chart zur Erläuterung des Ausführungsbeispiels nach Fig. 2.

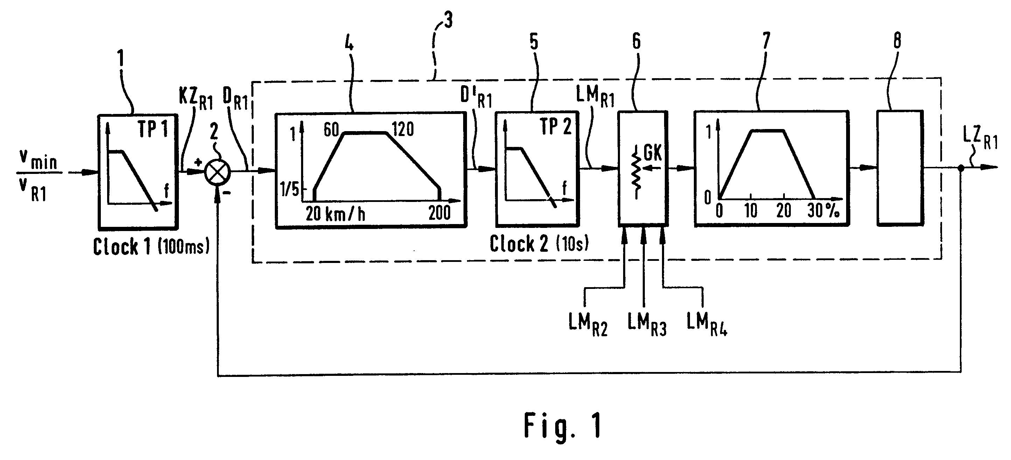

Die Erfindung geht von einem Verfahren aus, bei dem zur Ermittlung der Korrekturfaktoren, die die unterschiedlichen Reifenabrollumfänge erfassen und ausgleichen, zwischen Langzeit- und Kurzzeit-Korrekturfaktoren unterschieden wird. Aus der Differenz zwischen den Langzeit und den Kurzzeit-Korrekturfaktoren, durch Bewertung der Differenz, Gewichtung und Mittelwertbildung wird der Langzeit-Korrekturfaktor abgeleitet. Dies geschieht, wie im folgenden anhand der Fig. 1 erläutert wird, auf folgende Weise:

Als Eingangsgröße wird der Quotient aus der momentan niedrigsten Radgeschwindigkeit $v_{min}$ und aus der Geschwindigkeit des jeweiligen Rades - Fig. 1 zeigt den Zweig für das Rad R1 - gebildet. Mit Hilfe eines digitalen Filters oder digitalen Tiefpasses 1 (TP1) wird im Arbeitstakt des Clock 1, der hier ca. 100 ms beträgt, ein Mittelwert gebildet, der den Kurzzeit-Korrekturfaktor $KZ_{R1}$ darstellt. der Kurzzeit-Korrekturfaktor wird im vorliegenden Beispiel nach der Beziehung

$$KZ_{Rn} = \frac{1}{N} \sum_{i=1}^{N} \frac{C = V_{min\,i}}{V_{Rn\,i}}$$

gebildet, wobei die einzelnen Ausdrücke folgende Bedeutung haben:

$KZ_{Rn}$ =      Kurzzeit-Korrekturfaktors des Rades n (n = 1 bis 4; nach Fig. 1 gilt n = 1,
$N$ =      Anzahl der Loops bzw. Zyklen, über die der Mittelwert gebildet wird,
$v_{min}$ =      momentan niedrigste Radgeschwindigkeit,
$v_{Rn}$ =      momentane Geschwindigkeit des Rades n,
$C$ =      Konstante.

In einem Vergleicher und Differenzbilder 2 wird die Differenz $D_{R1}$ zwischen dem Langzeit-Korrekturfaktor $LZ_{R1}$ und dem Kurzzeit-Korrekturfaktor $KZ_{R1}$ gebildet. Aus der Differenz $D_{R1}$ werden in einer Filter- und Anpassungsschaltung 3 Korrekturwerte zur Anpassung des Langzeit-Korrekturfaktors $LZ_{R1}$ gewonnen.

Das die Differenz zwischen dem Langzeit- und dem Kurzzeit-Korrekturfaktor des Rades 1 wiedergebende Signal $D_{R1}$ wird in dem dargestellten Ausführungsbeispiel zunächst mit Hilfe eines Bandpasses 4 bewertet bzw. in Abhängigkeit von der Fahrzeuggeschwindigkeit gewichtet. Der Bandpaß 4 läßt in einem mittleren Geschwindigkeitsbereich, der hier zwischen 60 km/h und 120 km/h liegt, das Differenzsignal $D_{R1}$ in voller Höhe passieren, während unterhalb einer unteren Geschwindigkeitsschwelle von 20 km/h und oberhalb einer oberen Geschwindigkeitsschwelle von 200 km/h eine sehr hohe Dämpfung gegeben ist. Wie symbolisch im Bandpaß 4 angedeutet ist, nimmt die Signaldämpfung im Bereich zwischen 20 km/h und 60 km/h linear ab und im Bereich zwischen 120 km/h und 200 km/h linear zu.

Das Ausgangssignal $D'_{R1}$· des Bandpasses 4, nämlich das gewichtete Differenzsignal $D_{R1}$· wird in einem digitalen Tiefpaß 5 (TP2) weiterverarbeitet. Es wird ein Langzeit-Mittelwert nach der Beziehung

$$LM_{R1} = \frac{1}{M} \sum_{i=N}^{N \times M} f\,(D'_{R1})_i$$

gebildet, mit

$LM_{R1}$ =      Langzeit-Mittelwert des Rades 1
=      Mittelwert der gewichteten Abweichung ($D'_{R1}$) des Kurzzeit- von dem Langzeitkorrekturfaktor des Rades 1
$M$ =      Anzahl der Summierintervalle N.

Im vorliegenden Beispiel wird in Intervallen von ca. 10 bis 20 Sekunden jeweils ein Langzeit-Mittelwert $LM_{R1}$ gebildet.

Eine Dämpfungsschaltung 6 bewirkt, daß nur ein Teil des Langzeit-Mittelwertes $LM_{R1}$ weitergeleitet wird. Wie groß dieser Teil ist, hängt u.a. von sogen. Kurvengewichtungs-faktoren GK ab, die unter Berücksichtigung der Langzeit-Mittelworte der übrigen Räder R2,R3 und R4 mit Hilfe der Dämpfungsschaltung 6 ermittelt und ausgewertet werden. Durch diagonalen, seitenweisen und achsweisen Vergleich der Langzeit-Mittelwerte der einzelnen Räder läßt sich eine zweckmäßige Größe des Gewichtungsfaktors GK ermitteln.

Schließlich wird noch in einem anschließenden Bandpaß 7 radindividuell die Übernahme des Ausgangssignals der Dämpfungsschaltung 6 auf den Langzeit-Korrekturfaktor $LZ_{R1}$ begrenzt. Um die Auswirkung eines Überdrehen des Rades auf den Langzeit-Korrekturfaktor abzuschwächen, wird hier das Ausgangssignal der Dämpfungsschaltung 6, wenn diese Größe zwischen 0 und 10% liegt, vollständig übernommen, wenn sie zwischen 10 und 20% liegt, auf 10% begrenzt und, wenn sie zwischen 20 und 30% liegt, zu 10 bis 0% übernommen. Dieser Kurvenverlauf, der die Übernahme wiedergibt, ist in dem Bandpaß 7 symbolisch angedeutet.

Das Ausgangssignal des Bandpasses 7 wird in einer Anpassungsschaltung 8 zur Korrektur des Langzeit-Korrekturfaktors $LZ_{R1}$ herangezogen, der schließlich von dem Ausgang der Schaltung 8 zu dem Vergleicher und Differenzbilder 2 zurückgeführt wird. Der Langzeit-Korrekturfaktor wird für jedes Rad in der vorstehenden, für das Rad 1 geltenden Funktionsweise gebildet.

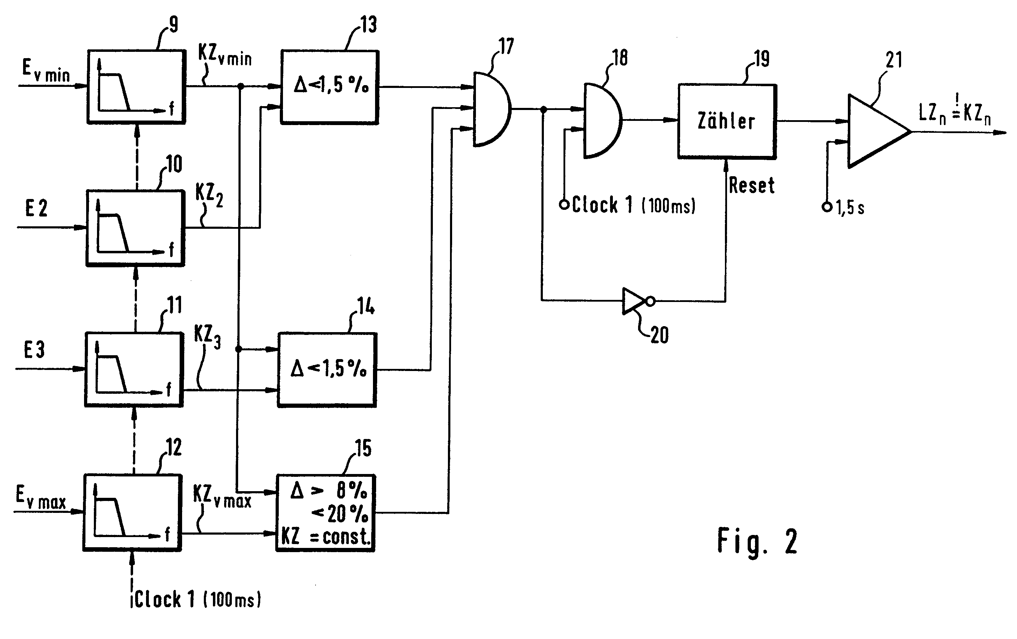

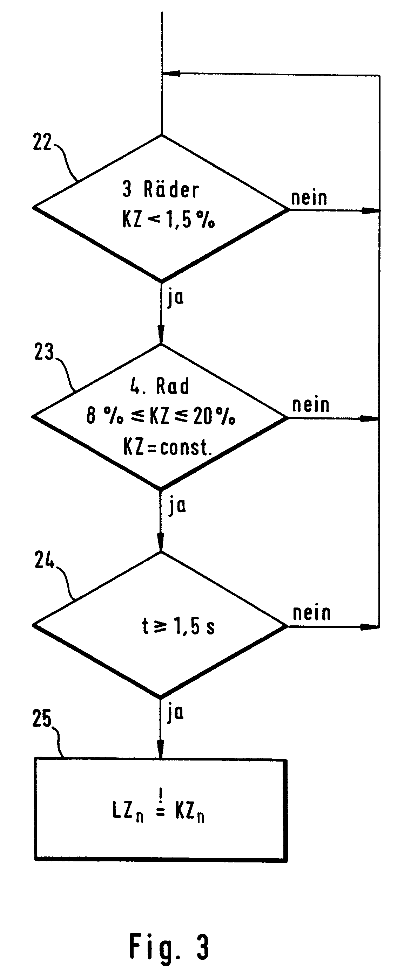

Die Besonderheiten des erfindungsgemäßen Verfahrens lassen die Figuren 2 und 3 erkennen. Die Schaltungen 9 bis 12 symbolisieren die digitalen Eingangsfilter oder Tiefpässe (TP1 in Fig. 1), an deren Ausgängen der Kurzzeit-Korrekturfaktor $KZ_{Rn}$ zur Verfügung steht. Das Eingangssignal $E_{min}$ entstammt dem Rad mit der momentan geringsten Geschwindigkeit, $E_{max}$ dem Rad mit der höchsten Geschwindigkeit. Die Eingangssignale der beiden anderen Räder sind E2 und E3 genannt. Clock 1 bezeichnet den Arbeitstakt der Mittelwertbildung zur Erzeugung der Kurzzeit-Korrekturfaktoren der einzelnen Räder genannt. Clock 1 beträgt hier etwa 100 ms.

Die Schwellwertstufen 13 und 14 führen ein Ausführungssignal (H), solange die Kurzzeitfaktoren $KZ_2$ und $KZ_3$ um weniger als 1,5% von dem Kurzzeitfaktor $KZ_{vmin}$ abweichen und wenn gleichzeitig das vierte Rad, nämlich das (kleinere) Notrad einen Kurzzeit-Korrekturfaktor $KZ_{vmax}$ aufweist, der um mehr als 8%, jedoch weniger als 20% von dem Kurzzeit-Korrekturfaktor $KZv_{min}$ abweicht. In dieser Situation ist die UND-Bedingung am Eingang des UND-Gatters 17 erfüllt. Über das weitere UND-Gatter 18 wird in diesem Falle im Arbeitstakt (Clock 1; z.B. 100 ms) ein Zähler angesteuert, der über einen Inverter 20 und den Reset-Eingang zurückgestellt wird.

Außerdem muß der Schlupf innerhalb dieses Bandes (> 8%,<20%) konstant bleiben, d.h. er darf um höchstens ± 1,5% variieren. Der "Notrad"-Zähler 19 wird also im Arbeitstakt (Clock 1) hochgezählt. Bei jeder Unterbrechung der Ansteuerpulsfolge wird der Zähler über den Inverter 20 und den Reset-Eingang zurückgestellt. Sobald das Hochzählen eine Zeitspanne von 1,5 Sekunden überschreitet, gibt ein Komparator 21 ein Ausgangssignal ab und bewirkt, daß die Langzeit-Korrekturfaktoren $LZ_n$ der einzelnen Räder in diesem Arbeitstakt den Kurzzeit-Korrekturfaktor $KZ_n$ gleichgesetzt werden. Dies geschieht nach dem Starten des Antriebsmotors ein einziges Mal. In den folgenden Arbeitstakten wird die Anpassung bzw. Korrektur des Langzeit-Korrekturfaktors in der anhand der Fig. 1 beschriebenen Weise fortgesetzt.

Fig. 3 ist ein Flow-Chart, das in extrem vereinfachter Form den anhand der Fig. 2 beschriebenen Ablauf wiedergibt. Wird in einer Stufe 22 erkannt, daß der Kurzzeit-Korrekturfaktor KZ von drei Rädern < 1,5% ist, wird in einem anschließenden Schritt 23 überprüft, ob die vorgenannten, für das vierte Rad geltenden Bedingungen ebenfalls erfüllt sind. Trifft dies zu, was bedeutet, daß das vierte Rad mit relativ hoher, konstanter Geschwindigkeit rotiert, und wenn dieser Zustand für eine Zeitspanne, die größer als 1,5 Sekunden ist, aufrechterhalten bleibt (Schritt 24), werden schließlich in der Programmstufe 25 die Langzeit-Korrekturfaktoren den Kurzzeit-Korrekturfaktoren gleichgesetzt.

Natürlich ist es möglich, den anhand der Figuren 2 und 3 beschriebenen Ablauf noch mit weiteren Bedingungen zu verknüpfen.

## Patentansprüche

1. Verfahren zum schnellen Erkennen eines Notrades, für ein Fahrzeug mit einem elektronischen Regelungssystem, bei dem das Drehverhalten der Räder mit Radsensoren ermittelt wird und bei dem mit Korrekturfaktoren die Unterschiede der Reifenabrollumfänge erfaßt werden,
dadurch **gekennzeichnet,**

- daß für jedes Rad ein Kurzzeit- ($KZ_{Rn}$) und ein Langzeit-Korrekturfaktor ($LZ_{Rn}$) gebildet werden,
- daß die Kurzzeit-Korrekturfaktoren ($KZ_{Rn}$) aus den im Arbeitstakt (Clock 1) gemessenen, momentanen Korrekturfaktoren durch Mittelwertbildung über eine Zeitspanne in der Größenordnung zwischen 30 und 300 ms ermittelt werden,
- daß die Langzeit-Korrekturfaktoren ($LZ_{Rn}$)aus den Differenzen ($D_{Rn}$) zwischen den Kurzzeit- und den Langzeit-Korrekturfaktoren des jeweiligen Rades durch Mittelwertbildung ($LM_{Rn}$) über eine Zeitspanne in der Größenordnung von 5 bis 30 Sekunden (Clock 2) und Bewertung des Mittelwertes gebildet werden, wobei jeweils ein Teilwert des Mittelwertes zur Anpassung des Langzeit-Korrekturfaktors ($LZ_{Rn}$) ausgewertet wird,
- daß nach einem vorgegebenen, regelmäßig wiederkehrenden Ereignis, insbesondere nach jedem Anlassen des Fahrzeugmotors, die Kurzzeit-Korrekturfaktoren ($KZ_{Rn}$) der einzelnen Räder untereinander verglichen und einmalig die Langzeit-Korrekturfaktoren ($LZ_{Rn}$) den Kurzzeit-Korrekturfaktoren ($KZ_{Rn}$) des jeweiligen Rades gleichgesetzt oder angenähert werden, wenn gleichzeitig die Kurzzeit-Korrekturfaktoren von drei Rädern ($KZ_{vmin}$) annähernd gleich sind, der Kurzzeit-Korrekturfaktor des vierten Rades für eine vorgegebene Mindestzeitspanne (t) einen relativ hohen, innerhalb eines vorgegebenen Bereichs liegenden Wert annimmt und der Kurzzeit-Korrekturfaktor ($KZ_{vmin}$) des vierten Rades während der Mindestzeitspanne annähernd konstant bleibt.

2. Verfahren nach Anspruch 1, dadurch **gekennzeichnet,** daß als Eingangsgröße zur Berechnung des Korrekturfaktors die niedrigste Radgeschwindigkeit ($v_{min}$) durch die Radgeschwindigkeit des jeweiligen Rades dividiert wird und daß das Gleichsetzen der Langzeit- und Kurzzeit-Korrekturfaktoren erfolgt, wenn die Kurzzeit-Korrekturfaktoren von drei Rädern kleiner als 1,5% sind und der Kurzzeit-Korrekturfaktor des vierten Rades innerhalb eines Bereiches zwischen 8% und 20% liegt und während der vorgegebenen Mindestzeitspanne um höchstens ± 1,5% variiert.

3. Verfahren nach Anspruch 2 oder 3, dadurch **gekennzeichnet,** daß die vorgegebene Mindestzeitspanne (t) 1 bis 3 Sekunden, insbesondere ca. 1,5 Sekunden beträgt.

4. Verfahren nach einem oder mehreren der Ansprüche 1 bis 3, dadurch **gekennzeichnet,** daß der Kurzzeit-Korrekturfaktor ($KZ_{Rn}$) durch Mittelwertbildung über eine Zeitspanne in der Größenordnung von 50 bis 200 ms (Clock 1) ermittelt wird.

5. Verfahren nach einem oder mehreren der Ansprüche 1 bis 4, dadurch **gekennzeichnet,** daß der Kurzzeit-Korrekturfaktor nach der Beziehung

$$KZ_{Rn} = \frac{1}{N} \sum_{i=1}^{N} \frac{C = V_{min\,i}}{V_{Rn\,i}}$$

gebildet wird, mit

$KZ_{Rn}$ = Kurzzeit-Korrekturfaktors des Rades n (n = 1 bis 4),
$N$ = Anzahl der Loops bzw. Zyklen, über die der Mittelwert gebildet wird,
$v_{min}$ = momentan niedrigste Radgeschwindigkeit,
$v_{Rn}$ = momentane Geschwindigkeit des Rades n,
$C$ = Konstante.

6. Verfahren nach einem oder mehreren der Ansprüche 1 bis 5, dadurch **gekennzeichnet,** daß der Langzeit-Korrekturfaktor ($LZ_{Rn}$) durch Mittelwertbildung über eine Zeitspanne in der Größenordnung von 10 bis 20 Sekunden (Clock 2) gebildet wird.

## Claims

1. Process of quick identification of an emergency wheel, for a vehicle including an electronic control system, wherein the rotational behavior of the wheels is sensed by wheel sensors, and wherein the differences of the tire tread circumferences are determined by way of correction factors, **characterized** in that

   - a short-time correction factor ($KZ_{Rn}$) and a long-time correction factor ($LZ_{Rn}$) is produced for each wheel,
   - the short-time correction factors ($KZ_{Rn}$) are determined from the instantaneous correction factors measured in the working cycle (Clock 1) by averaging them during a time interval in the order of 30 to 300 msec,
   - the long-time correction factors ($LZ_{Rn}$) are determined from the differences ($D_{Rn}$) between the short-time and the long-time correction factors of the respective wheel by averaging ($LM_{Rn}$) them during a time interval in the order of 5 to 30 seconds (Clock 2) and by evaluating the average value, and a partial value of the average value is in each case evaluated for adapting the long-time correction factor ($LZ_{Rn}$),
   - after a predetermined, recurrent event, in particular after each start of the vehicle engine, the short-time correction factors ($KZ_{Rn}$) of the individual wheels are compared, and the long-time correction factors ($LZ_{Rn}$) are equalled or approximated one time to the short-time correction factors ($KZ_{Rn}$) of the respective wheel, if, simultaneously, the short-time correction factors of three wheels ($KZ_{vmin}, KZ_2, KZ_3$) are approximately equal,
   - the short-time correction factor of the fourth wheel adopts a relatively high value, which is within a predetermined range, for a predetermined minimum time interval (t), and
   - the short-time correction factor ($KZ_{vmin}$) of the fourth wheel remains approximately constant during the minimum time interval.

2. Process as claimed in claim 1, **characterized** in that the lowest wheel speed ($v_{min}$) is divided by the wheel speed of the respective wheel as an input quantity for the calculation of the correction factor, and in that the long-time and short-time correction factors are equalled when the short-time correction factors of three wheels are smaller than 1.5% and the short-time correction factor of the fourth wheel is within a range between 8% and 20% and varies by ± 1.5% at most during the predetermined minimum time interval.

3. Process as claimed in claim 2 or 3, **characterized** in that the predetermined minimum time interval (t) amounts to 1 to 3 seconds, more particularly, to roughly 1.5 seconds.

4. Process as claimed in any one or more of claims 1 to 3, **characterized** in that the short-time correction factor ($KZ_{Rn}$) is determined by averaging during a time interval in the order of 50 to 200 msec (Clock 1).

5. Process as claimed in any one or more of claims 1 to 4, **characterized** in that the short-time correction factor is determined according to the relation

$$KZ_{Rn} = \frac{1}{N} \sum_{i=1}^{N} \frac{C = V_{min\,i}}{V_{Rn\,i}}$$

wherein

$KZ_{Rn}$    refers to the short-time correction factor of wheel n (n = 1 to 4),

N    is the number of loops or cycles, across which the average value is produced,

$v_{min}$    is the instantaneously lowest wheel speed,

$v_{Rn}$    is the instantaneous speed of wheel n,

C    is a constant.

6. Process as claimed in any one or more of claims 1 to 5,
**characterized** in that the long-time correction factor ($LZ_{Rn}$) is determined by averaging during a time interval in the order of 10 to 20 seconds (Clock 2).

## Revendications

1. Procédé de reconnaissance rapide d'une roue de secours, pour véhicule à système de régulation électronique, selon lequel le comportement des roues en rotation est déterminé au moyen de capteurs de roue et selon lequel les différences des circonférences de roulement de pneumatique sont relevées avec des facteurs de correction,
    caractérisé

    - en ce que, pour chaque roue, un facteur de correction à court terme ($KZ_{Rn}$) et un facteur de correction à long terme ($LZ_{Rn}$) sont formés,
    - en ce que les facteurs de correction à court terme ($KZ_{Rn}$) sont déterminés à partir des facteurs de correction momentanés mesurés au rythme (clock 1) par formation de valeur moyenne sur un intervalle de temps de l'ordre de grandeur compris entre 30 et 300 ms,
    - en ce que les facteurs de correction à long terme ($LZ_{Rn}$) sont déterminés à partir des différences ($D_{Rn}$) entre les facteurs à court terme et à long terme de la roue respective par formation de valeur moyenne ($LM_{Rn}$) sur un intervalle de temps de l'ordre de grandeur de 5 à 30 secondes (clock 2) et pondération de la valeur moyenne, une valeur partielle de la valeur moyenne étant chaque fois utilisée pour l'adaptation du facteur de correction à long terme ($LZ_{Rn}$),
    - en ce qu'après un événement préfixé revenant régulièrement, notamment après chaque démarrage du moteur du véhicule, les facteurs de correction à court terme ($KZ_{Rn}$) des différentes roues sont comparés entre eux et les facteurs de correction à long terme ($LZ_{Rn}$)

reçoivent des valeurs égales, ou approchées, aux facteurs de correction à court terme ($KZ_{Rn}$) des roues respectives chaque fois que, simultanément, les facteurs de correction à court terme de trois roues ($KZ_{vmin}$) sont approximativement égaux, le facteur de correction à court terme de la quatrième roue prend pendant un intervalle de temps minimal (t) préfixé une valeur relativement élevée située dans un domaine préfixé et le facteur de correction à court terme ($KZ_{vmin}$) de la quatrième roue reste approximativement constant pendant l'intervalle de temps minimal.

2. Procédé suivant la revendication 1, caractérisé en ce qu'en tant que grandeur d'entrée pour le calcul du facteur de correction, la vitesse de roue la plus faible ($v_{min}$) est divisée par la vitesse de roue de la roue considérée et en ce que l'égalisation des facteurs de correction à long terme et à court terme a lieu lorsque les facteurs de correction à court terme de trois roues sont inférieurs à 1,5% et que le facteur de correction à court terme de la quatrième roue est situé dans un domaine compris entre 8% et 20% et varie d'au maximum +/-1,5% pendant l'intervalle de temps minimal préfixe.

3. Procédé suivant la revendication 2 ou 3, caractérisé en ce que l'intervalle de temps minimal préfixé (t) vaut 1 à 3 secondes, notamment environ 1,5 seconde.

4. Procédé suivant une ou plusieurs des revendications 1 à 3, caractérisé en ce que le facteur de correction à court terme ($KZ_{Rn}$) est déterminé par formation de valeur moyenne sur l'étendue d'un intervalle de temps de l'ordre de grandeur de 50 à 200 ms (clock 1).

5. Procédé suivant une ou plusieurs des revendications 1 à 4, caractérisé en ce que le facteur de correction à court terme est formé conformément à la relation :

$$KZ_{Rn} = (1/N) \sum_{i=1}^{i=N} (C \cdot v_{min\,i} / v_{Rn\,i})$$

avec :

$KZ_{Rn}$ =    facteur de correction à court terme de la roue n (n = 1 à 4),

N =    nombre des boucles ou cycles sur l'étendue desquels la valeur moyenne est formée,

$v_{min}$ =    vitesse de roue momentanément la plus faible,

$v_{Rn}$ =    vitesse momentanée de la roue n,

C =    constante.

6. Procédé suivant une ou plusieurs des revendications 1 à 5, caractérisé en ce que le facteur de correction à long terme ($LZ_{Rn}$) est formé par formation de valeur moyenne sur l'étendue d'un intervalle de temps de l'ordre de grandeur de 10 à 20 secondes (clock 2).

Fig. 1

EP 0 776 288 B1

Fig. 2

22

3 Räder
KZ < 1,5 %

nein

ja

23

4. Rad
$8\% \leq KZ \leq 20\%$
KZ = const.

nein

ja

24

$t \geq 1,5$ s

nein

ja

25

$$LZ_n \stackrel{!}{=} KZ_n$$

Fig. 3